# EUROPEAN PATENT APPLICATION

(11) **EP 2 154 820 A1**
(43) Date of publication of application: **17.02.2010**
(21) Application number: 08843309.9
(22) Date of filing: 15.10.2008
(51) Int. Cl.: H04L 12/18

(54) **A METHOD FOR INITIATING CONFERENCES, AN APPLICATION SERVICE PROXY, A CONFERENCE SERVER AND SYSTEM**

(30) Priority: 16.10.2007 CN 200710163200
(71) Applicant: Huawei Technologies Co., Ltd., Longgang District, Shenzhen Guangdong 518129 (CN)
(72) Inventor: SHEN, Qingchun, Longgang District 518129 Shenzhen (CN)
(74) Representative: Kreuz, Georg Maria
(86) International application number: PCT/CN2008/072697
(87) International publication number: WO 2009/052746

(57) **Abstract**

A method for initiating a conference, an application service agent, a conference server, and a system are disclosed herein. In this method, the conference system obtains the terminal type of multiple conference attendees according to the message sent by the terminal, and originates a call to the terminal corresponding to the terminal type of the conference attendee according to the protocol type supported by the terminal type of the conference attendee; switches the call to the network that supports the protocol type, and routes the call to the corresponding terminal through the network; and switches the information fed back by the terminal and transmitted through the network to the site created by the conference server. Therefore, the embodiments of the present invention can connect multiple types of terminals in different networks into the conference. Besides, based on the short message created according to the set short message template, the conference server can connect multiple types of terminals into the conference at the conference initiation time, and support conference reservation.

## Description

### FIELD OF THE INVENTION

The present invention relates to the field of communications, and in particular, to a method for initiating a conference, an application service agent, a conference server, and a system.

### BACKGROUND

With the development of various data services and voice services, the solutions to combining data services with voice services are emerging. For example, by combining the Short Message Service (SMS) with the voice conference, the user can utilize a portable terminal to send short messages and initiate a multi-party conference anytime anywhere.

The prior art provides a method of using short messages to initiate a multi-party conference. In this method, the mobile terminal sends a short message to the mobile network. The short message is forwarded to an SMS protocol stack platform through the Short Message Service Center (SMSC). The short message protocol stack platform sends an ISDN User Part (ISUP) signaling to a fixed terminal in the Public Switched Telephone Network (PSTN). Through the ISUP signaling, the fixed terminal in the PSTN is connected to the voice conference.

However, the following defects have become apparent in the prior art:

In the prior art, multiple fixed terminals join a voice conference in the PSTN through the ISUP signaling interaction mode in the PSTN, but it is impossible to connect various terminals in different networks into the conference.

### SUMMARY

The present invention provides a method for initiating a conference, an application service agent, a conference server, and a system to connect various terminals in different networks into the conference.

As a first aspect of the invention the method for initiating a conference includes:
obtaining the terminal type of multiple conference attendees according to the received message;
originating a call to the terminal corresponding to the terminal type of the conference attendee according to the protocol type supported by the terminal type of the conference attendee;
switching the call to the network that supports the protocol type, and routing the call to the terminal corresponding to the terminal type of the conference attendee through the network; and
switching the information fed back by the terminal and transmitted through the network to a created conference site.

As a second aspect of the invention the conference system includes a protocol stack platform which is adapted to forward the message sent by the terminal. The conference system further includes:
an application service agent, adapted to: receive the message forwarded by the protocol stack platform, obtain the terminal type of multiple conference attendees according to the received message, and send a conference initiation request that carries the obtained terminal type of multiple conference attendees;
a conference server, adapted to: receive the conference initiation request sent by the application service agent, obtain the terminal type of multiple conference attendees, and originate a call to the terminal corresponding to the terminal type of the conference attendee according to the protocol type supported by the terminal type of the conference attendee; and
a network component, adapted to: switch the call to the network that supports the protocol type, and route the call to the terminal corresponding to the terminal type of the conference attendee through the network; and switch the information fed back by the terminal and transmitted through the network to the conference site created by the conference server.

As a third aspect of the invention the application service agent includes:
an obtaining unit, adapted to obtain the terminal type of multiple conference attendees according to the received message; and
a transmitting unit, adapted to send a conference initiation request that carries the obtained terminal type of multiple conference attendees.

As a fourth aspect of the invention the conference server includes:
an information obtaining unit, adapted to: receive a conference initiation request, and obtain the terminal type of multiple conference attendees from the received conference initiation request; and
an information processing unit, adapted to: originate a call to the terminal corresponding to the terminal type of the conference attendee according to the protocol type supported by the terminal type of the conference attendee, and notify the switch to switch the call to the network that supports the protocol type and route the call to the corresponding terminal through the network.

Compared with the prior art, the present invention enables to:
obtain the terminal type of multiple conference attendees according to the message sent by the terminal, and originate a call to the terminal corresponding to the terminal type of the conference attendee according to the protocol type supported by the terminal type of the conference attendee; switch the call request to the network that supports the protocol type supported by the terminal type of the conference attendee, and route the call request to the corresponding terminal through the network; and switch the information fed back by the terminal and transmitted through the network to the site created by the conference server. Therefore, the embodiments of the present invention connect various terminals in different networks into the conference.

### BRIEF DESCRIPTION OF THE DRAWINGS

FIG. 1 shows a system structure in the first embodiment of the present invention;
FIG. 2 shows system networking applied in the first embodiment of the present invention;
FIG. 3 is a flowchart of the first embodiment of the present invention;
FIG. 4 is a flowchart of connecting a mobile station and two SIP terminals into the same site in the first embodiment of the present invention;
FIG. 5 shows a structure of an application service agent in the second embodiment of the present invention; and
FIG. 6 shows a structure of a conference server in the third embodiment of the present invention.

### DETAILED DESCRIPTION

The first embodiment of the present invention provides a method for initiating a conference to connect various terminals in different networks into the conference.

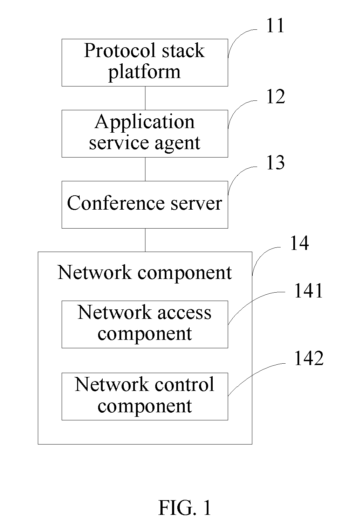

The first embodiment of the present invention may be applied to the following conference system. As shown in FIG. 1, the conference system includes a protocol stack platform 11, an application service agent 12, a conference server 13, and a network component 14.

The protocol stack platform 11 is adapted to forward a message sent by the terminal.

The application service agent 12 is adapted to: receive the message forwarded by the protocol stack platform 11, obtain the terminal type of multiple conference attendees according to the received message; and send a conference initiation request that carries the obtained terminal type of multiple conference attendees to the conference server 13.

The conference server 13 is adapted to: receive the conference initiation request sent by the application service agent 12, obtain the terminal type of multiple conference attendees, and originate a call to the terminal corresponding to the terminal type of the conference attendee according to the protocol type supported by the terminal type of the conference attendee.

The network component 14 is adapted to: switch the call to the network that supports the protocol type, and route the call to the terminal corresponding to the terminal type of the conference attendee through the network; and switch the information fed back by the terminal and transmitted through the network to the site created by the conference server 13. The network component 14 further includes a network access component 141 and a network control component 142.

In the first embodiment of the present invention, the message is a short message, and the application service agent is an SMS application service agent. In practice, however, the message sent by terminal is not limited to short messages, and may be another type of messages.

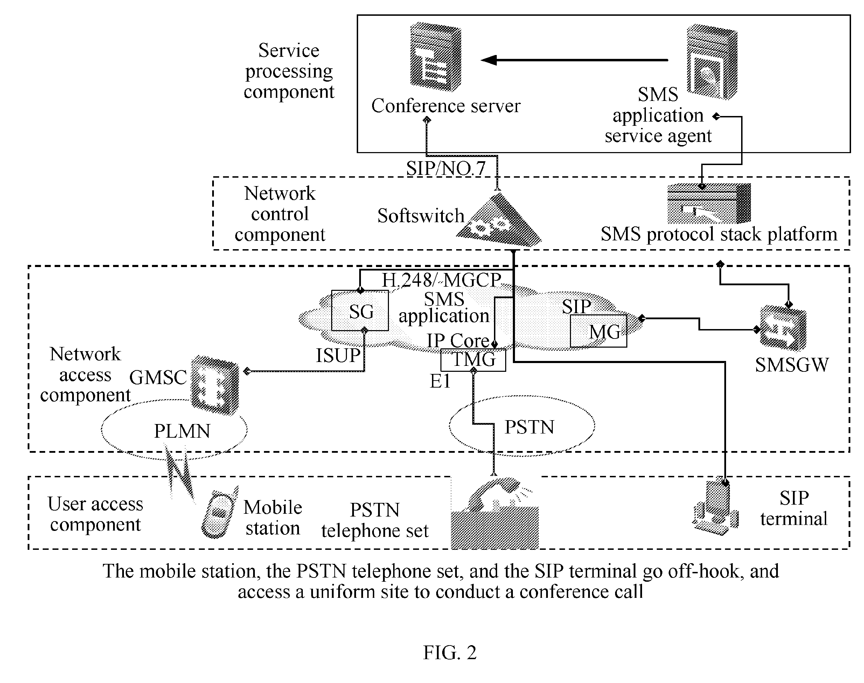

Given below is a system networking. As shown in FIG. 2, the system includes: a user access component, a network access component, a network control component, and a service processing component.

The user access component may be different types of terminals, for example, message sending tools such as a client, a mobile station, a fixed terminal, or a Session Initiation Protocol (SIP) terminal (FIG. 2 illustrates only a mobile station, a fixed terminal, and a SIP terminal).

The network access component may be network access devices carried in different types of networks, for example, a Signaling Gateway (SG) carried in a mobile fundamental network such as a Public Land Mobile Network (PLMN), a trunking gateway carried in a fixed fundamental network such as an PSTN, a Media Gateway (MG) carried in an Internet Protocol (IP) network (such as a Trunking Media Gateway (TMG) carried in a Next Generation Network (NGN)), and a Short Message Service Gateway (SMS GW) carried in an IP network. The network access components are adapted to connect the information sent by the user access components into the corresponding network.

The network control component may be an IP network core component - a switch (such as a softswitch), a message center, and a protocol stack platform.

The service processing component may be an application service agent and a conference server.

In the foregoing system networking, the message center is an SMSC; the protocol stack platform is an SMS protocol stack platform; the application service agent is an SMS application service agent. The SMS application service agent is responsible for resolving short messages, and controlling and initiating a conference registration process according to the short message-related information in the resolving result.

The conference server initiates a call through the corresponding protocol at the required time of initiating the conference in view of the terminal type according to the conference request and the terminal type in the message, sets up a conference site, and manages conference media resources such as mixed audio of site control.

The information interaction relation between the components is as follows:

Various message sending tools in the user access components, for example, a client and a mobile station, send a short message to the network access component, where the short message is edited by the user according to the preset short message template. An example of the short message is J(oin) 136XXXX, 289XXXX, 139XXXX S(tart) T(ime) 200704301400 T(o)T(ime) 200704301600.

Among the network access component, the SMS GW is based on the corresponding short message protocol such as China Mobile Point to Point Protocol (CMPP) or Short Message Point to Point Protocol (SMPP). The SMS GW forwards the short message to the SMSC on the network control layer, the SMSC forwards the short message to the SMS platform protocol stack, and the SMS platform protocol stack reports the short message content to the SMS application service agent on the network control layer based on the CMPP or the SMPP.

Among the network control components, the SMS application service agent uses the corresponding short message template to resolve the received short message. The resolving result may include multiple conference attendee names and/or numbers, and may further include the conference initiation time (namely, the time of initiating the conference), and may further include the conference end time and/or the chair's number. If the resolving result includes the conference attendee name and/or the conference attendee number, the SMS application service agent searches the database for the account registered by the conference attendee name and/or the conference attendee number according to the conference attendee name and/or the conference attendee number, and determines the terminal type corresponding to the conference attendee name or the conference attendee number according to the account (the conference attendee needs to open an account based on the SMS application agent beforehand, the basic data information of the attendee is stored at the time of opening the account, including the conference attendee name and/or the conference attendee number, and the attendee account allocated to the conference attendee name and/or the conference attendee number; and the terminal type corresponding to the attendee account is recorded). The terminal type may be a soft terminal, such as mobile terminal, fixed terminal, SIP terminal or PC terminal, or may be other types of terminals. A conference initiation request is sent according to the resolving result or according to the information deriving from the resolving result. Through a Hyper Text Transfer Protocol (HTTP) interface or a Web Service/Simple Object Access Protocol (SOAP) interface, the conference initiation request is sent to the conference server. The conference initiation request carries the terminal type of the conference attendee, and may further carry the conference initiation time, and may further carry the conference type (not allowing other numbers to dial in, or allowing other numbers to dial in through a conference ID, etc.), thus requesting the conference server to initiate a conference, route the conference call, and create and manage the conference site.

The conference server creates a conference site and initiates a conference according to the conference initiation request, initiates a call according to the protocol supported by the terminal type of the conference attendee, and routes the call from the terminals corresponding to multiple terminal types into the same conference site, and implements a multi-party conference call through conference site management and mixed audio.

If the conference initiation request carries the conference initiation time, the conference server initiates the conference at the conference initiation time. According to the terminal type of the conference attendee, the conference server initiates calls respectively through the protocol supported by the terminal type of the conference attendee.

For example, if the conference server determines that the terminal type of the conference attendee is a mobile terminal, the conference server originates a call to a softswitch through SS7. The softswitch switches the call to the SG in the mobile network, thus routing the call signaling to the mobile network. The access device in the mobile network connects up the mobile terminal;

If the conference server determines that the terminal type of the conference attendee is a fixed terminal, the conference server originates a call to the softswitch through SS7. The softswitch switches the call to the trunking gateway in the PSTN, thus routing the call signaling to the PSTN. The access device in the PSTN connects up the fixed terminal;

If the conference server determines that the terminal type of the conference attendee is a soft terminal, the conference server originates a call to the softswitch through a SIP protocol. The softswitch switches the call to the IP network. The access device (such as MG, or TMG in the NGN network) in the IP network routes the call signaling to the SIP terminal or PC soft terminal.

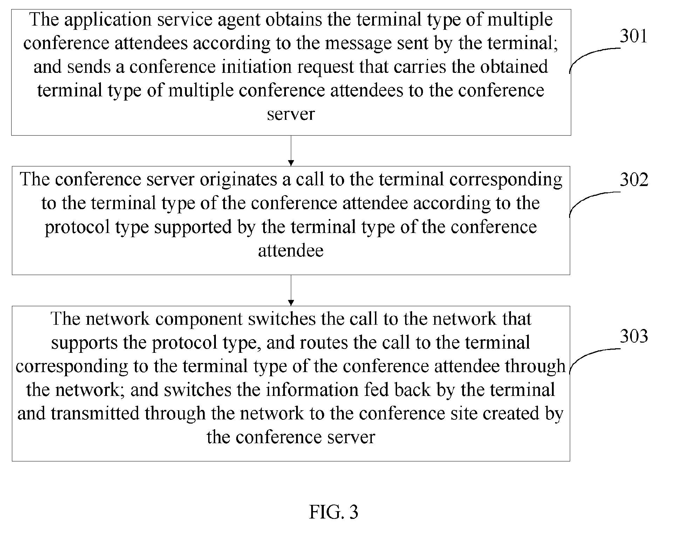

As shown in FIG. 3, the process of implementing the method in the first embodiment of the present invention includes:

Step 301: The application service agent obtains the terminal type of multiple conference attendees according to the message sent by a terminal, and sends a conference initiation request that carries the obtained terminal type of multiple conference attendees to the conference server.

The message is a short message, and the application service agent is an SMS application service agent. The SMS application service agent resolves the short message sent by the terminal according to the short message template used by the terminal at the time of sending the short message, and therefore, obtains the attendee information, including multiple conference attendee names and/or numbers.

The SMS application service agent searches for the registered account according to the obtained conference attendee information, and obtains the terminal type of multiple conference attendees according to the terminal type corresponding to the found account.

Step 302: The conference server originates a call to the terminal corresponding to the terminal type of the conference attendee according to the protocol type supported by the terminal type of the conference attendee.

Step 303: The call is switched to the network that supports the protocol type supported by the terminal type of the conference attendee, and routed to the terminal corresponding to the terminal type of the conference attendee through the network. The information fed back by the terminal and transmitted through the network is switched to the conference site created by the conference server.

If the terminal type of the conference attendee is a mobile terminal, the conference server originates a call to the mobile terminal through the SS7 supported by the terminal type. The call is soft switched to the mobile network, and transmitted by the mobile network to the corresponding mobile terminal. According to the call response returned by the mobile terminal and transmitted by the mobile network, the conference server connects the mobile terminal into the conference site created by the conference server.

If the terminal type of the conference attendee is a fixed terminal, the conference server originates a call to the fixed terminal through the SS7 supported by the terminal type. The call is soft switched to the fixed fundamental network, and transmitted by the fixed fundamental network to the fixed terminal. According to the call response returned by the fixed terminal and transmitted by the fixed fundamental network, the conference server connects the fixed terminal into the conference site created by the conference server.

If the terminal type of the conference attendee is a soft terminal, the conference server originates a call to the soft terminal through the SIP supported by the terminal type. The call is soft switched to the IP network, and transmitted by the IP network to the soft terminal. According to the call response returned by the soft terminal and transmitted by the IP network, the conference server connects the soft terminal into the conference site created by the conference server.

In the foregoing embodiment of the present invention, the conference initiation time may be obtained from the message sent by the terminal. The application service agent sends a conference initiation request that carries the conference initiation time to the conference server. The conference server originates a call to the terminal corresponding to the terminal type of the conference attendee at the conference initiation time according to the protocol type supported by the terminal type of multiple conference attendees; and the conference server switches the call to the network that supports the protocol type supported by the terminal type of the conference attendee, and routes the call to the terminal corresponding to the terminal type of the conference attendee through the network; and the conference server switches the information fed back by the terminal and transmitted through the network to the conference site created by the conference server. Importantly, the message sent by the terminal in an embodiment of the present invention is not limited to a type of short message, and the terminal may send other types of messages. All other message types for initiating a conference known to those skilled in the art shall fall within the protection scope of the present invention.

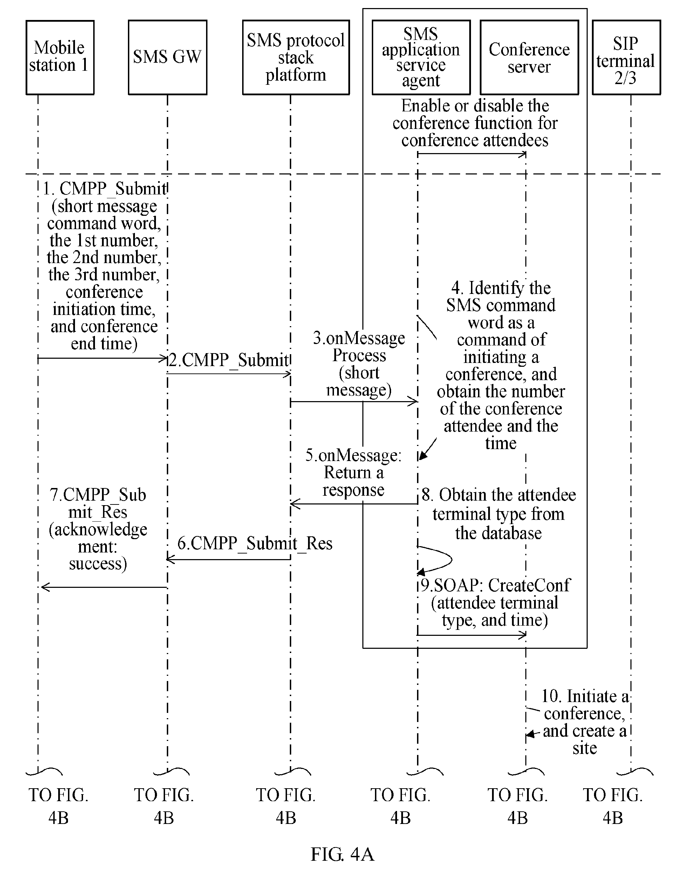

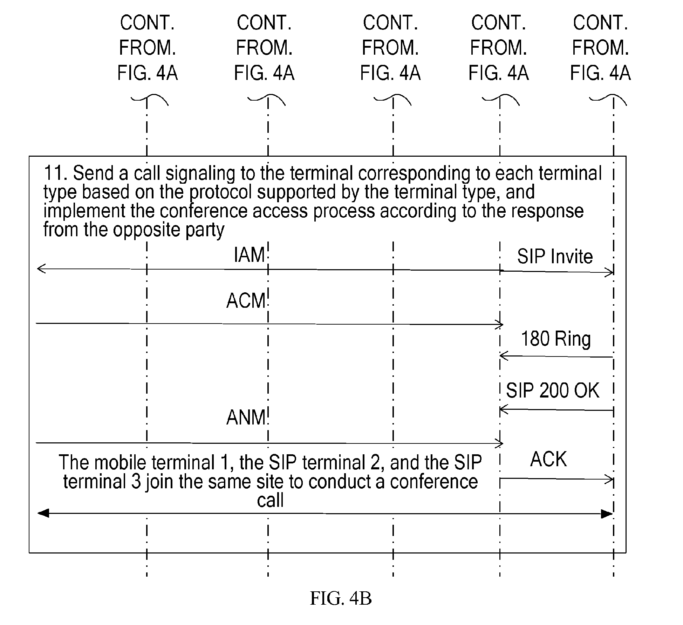

Supposing that a mobile station sends a short message to connect a fixed terminal, the mobile station and an SIP terminal into the same conference site, the embodiments of the present invention are elaborated below. In this instance, the conference attendee needs to create an account in the conference server. At the time of creating the account, the basic information about the conference attendee is stored into the database. The information includes the conference attendee name and/or the conference attendee number, and the account allocated to the conference attendee name or the conference attendee number. Besides, the corresponding relation between the account and the terminal type of the terminal used by the conference attendee is stored. As shown in FIG. 4, the process of implementing this instance includes the following steps:

Step 1: A user edits a short message according to a preset short message template, for example, "short message command word, number of conference attendee 1, number of conference attendee 2...number of conference attendee n, conference initiation time to conference end time", to obtain a short message such as "Conference: J(oin)281XXXX, 289XXXX, 139XXXX, S(tart) T(ime)200704301400 T(o) T(ime)200704301600". The mobile station sends the short message, and the short message is routed to the SMS GW through a CMPP/SMPP-based CMPP_Submit message.

Step 2: The SMS GW forwards the CMPP_Submit message to the SMS protocol stack platform through the SMSC based on the CMPP/SMPP.

Step 3: The SMS protocol stack platform sends the short message to the SMS application service agent through an SMS reporting interface (onMessageProcess).

Step 4: The SMS application service agent receives the short message, resolves the received short message based on the corresponding short message template, namely, identifies the message is intended for initiating a conference according to the short message command word, and obtains three attendee numbers "281XXXX", "289XXXX", and "139XXXX" as well as the conference initiation time and the conference end time according to other information in the short message.

Step 5 - step 7: After resolving the short message, the SMS application service agent responds to the CMPP_Submit message, and sends an onMessage to the SMS protocol stack platform through an API interface. The SMS protocol stack platform responds to the short message initiation request through a CMPP or SMPP response message (such as CMPP_Submit_Res). The response message is finally sent through the SMS GW to the mobile station that sends the short message, indicating that the request of initiating a conference through the short message is accepted normally.

Step 8: After the SMS application agent finishes handling the short message request, the SMS application agent searches the SMS application agent database based on the conference attendee number obtained through resolving, and therefore, obtains the terminal type of the terminal used by the conference attendee.

The SMS application service agent searches the SMS application agent database for the account corresponding to the conference attendee number, and determines the terminal type of the terminal used by the conference attendee according to the corresponding relation between the account and the terminal type information. For example, the terminal type corresponding to the account "281XXXX" is a SIP terminal, the terminal type corresponding to the account "289XXXX" is a SIP terminal, and the terminal type corresponding to the account "139XXXX" is a mobile terminal.

Step 9: The SMS application agent sends a conference initiation request (such as CreateConf) to the conference server through a web service interface (based on SOAP protocol). The conference initiation request includes the terminal type of the conference attendee, and may further include: attendee number, conference initiation time, conference end time, or conference type, or any combination thereof.

Step 10: The conference server creates conference site resource according to the conference initiation request sent by the SMS application agent.

Step 11: According to the protocol supported by the terminal type of the conference attendee, the conference server sends a call request to the attendee terminal, and connects each attendee terminal into the conference site according to the response of the attendee terminal.

If the conference initiation request carries the conference initiation time, the conference server sends a call request to the attendee terminal at the conference initiation time according to the protocol supported by the terminal type of the conference attendee.

If the terminal type is a mobile terminal, the conference server initiates an IAM call through the SS7. The IAM call is switched by the softswitch in the IP network (the conference server may be registered on the softswitch) and then routed to the SG The SG forwards the IAM call to the Mobile Switching Center (MSC) that covers the mobile terminal, and the mobile terminal is put through. The mobile terminal rings, and returns an ACM (acknowledgement message) and an ANM (off-hook message) to the SG The SG sends such messages to the softswitch, and the softswitch submits the messages to the conference server, and the conference server connects the mobile terminal into the created conference site.

If the terminal type is a fixed terminal, the conference server sends an IAM call to the softswitch in the IP network through the SS7. The IAM call arrives at the PSTN after being processed by the softswitch, and is then routed to the fixed terminal through the PSTN. The fixed terminal rings and then returns an ACM and an ANM to the softswitch through an edge access device, and then the softswitch submits the ANM to the conference server, and the conference server connects the fixed terminal into the conference site.

If the terminal type is a SIP terminal, the conference server initiates a call through the SIP protocol, and sends a SIP Invite message that carries the conference site media information to the softswitch in the IP network. After message being processed by the softswitch, the message is routed by the MG to the soft terminal or the SIP terminal. The SIP terminal rings, and then returns a ring message (such as 180 Ring message) (The ring message passes through the MG and arrives at the softswitch in the IP network, and then arrives at the conference server after being switched by the soft switch). Based on the media capability requirement of the conference site, the SIP terminal returns the matching terminal media information, for example, audio and video capabilities and terminal IP port. After the terminal goes off-hook, the terminal returns a SIP 200 OK message (off-hook message) to the conference server through the softswitch, and the conference server returns an ACK message to the SIP terminal through the softswitch. Now the SIP terminal is connected into the conference site.

Upon completion of the foregoing steps, the mobile station 1, the SIP terminal 2, and the SIP terminal 3 are connected into the same conference site, thus accomplishing a multi-party service.

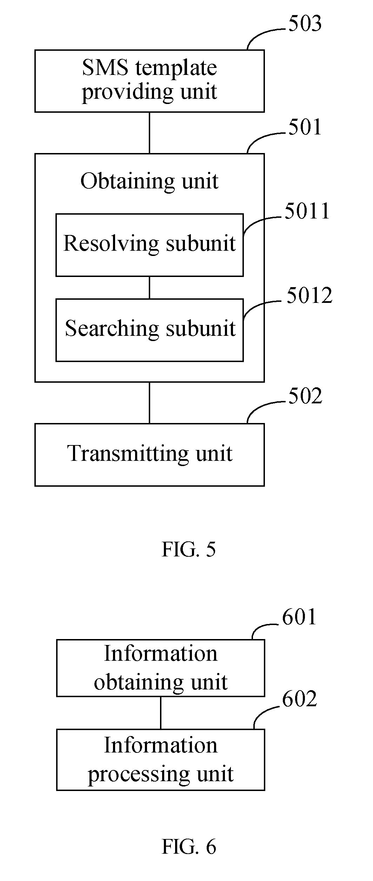

An application service agent is provided in the second embodiment of the present invention. As shown in FIG. 5, the application service agent includes:
an obtaining unit 501, adapted to obtain the terminal type of multiple conference attendees according to the message sent by the terminal; and
a transmitting unit 502, adapted to send a conference initiation request that carries the obtained terminal type of multiple conference attendees.

In the second embodiment of the present invention, the message sent by the terminal is a short message, and the application service agent is an SMS application service agent. The SMS application service agent may further include:
a short message template providing unit 503, adapted to provide a short message template for the obtaining unit 501. Accordingly, the obtaining unit 501 may further include a resolving subunit 5011 and a searching subunit 5012;
the resolving subunit 5011, adapted to: select a short message template out of the short message templates provided by the short message template providing unit 503 according to the received short message, and use the selected short message template to resolve the received short message, and obtain multiple conference attendee names and/or multiple conference attendee numbers; and
the searching subunit 5012, adapted to: search for the registered account according to the obtained multiple conference attendee names and/or numbers, and obtain the terminal type of multiple conference attendees according to the terminal type corresponding to the found account.

The resolving subunit 5011 may be further adapted to resolve the received short message according to the short message template used by the received short message to obtain the conference initiation time. Accordingly, the transmitting unit 502 is further adapted to send a conference initiation request that carries the obtained conference initiation time.

The functions of the units in the second embodiment are the same as the functions described in the first embodiment, and are not repeated here any further.

A conference server is provided in the third embodiment of the present invention. As shown in FIG. 6, the conference server includes:
an information obtaining unit 601, adapted to obtain the terminal type of multiple conference attendees from the received conference initiation request; and
an information processing unit 602, adapted to: originate a call to the terminal corresponding to the terminal type of the conference attendees according to the protocol type supported by the terminal type of the conference attendee, and notify the switch to switch the call to the network that supports the protocol type and route the call to the corresponding terminal through the network.

The information obtaining unit 601 is further adapted to obtain the conference initiation time from the received conference initiation request. Accordingly, the information processing unit 602 is further adapted to: originate a call to the terminal corresponding to the terminal type of the conference attendee at the conference initiation time obtained by the information obtaining unit according to the protocol type supported by the terminal type of the conference attendee; and notify the switch to switch the call to the network that supports the protocol type and route the call to the corresponding terminal through the network.

The functions of the units in the third embodiment are the same as the functions described in the first embodiment, and are not repeated here any further.

The technical solution provided in the embodiments of the present invention reveals that: According to the short message sent by the terminal, the terminal type of multiple conference attendees is obtained. According to the protocol type supported by the terminal type of the conference attendee, a call is originated to the terminal corresponding to the terminal type of the conference attendee. The call is switched into the network that supports the protocol type, and is routed by the network to the terminal corresponding to the terminal type of the conference attendee;. The information fed back by the terminal and transmitted through the network is switched to the conference site created by the conference server. Therefore, the short message sending terminal sends a short message to connect multiple types of terminals in different networks into a conference at the same time. The conference attendees can be convened anytime anywhere, thus overcoming the difficulty of connecting various terminals controllable by the SIP-based and SS7-based core protocols into the conference under the network conditions that combine an IP network and a PSTN network.

In the embodiments of the present invention, the short message is edited according to a preset short message template, the conference initiation time can be reserved, and different types of conferences can be initiated, including reserved conferences and instant conferences.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

Although the invention has been described through several preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for initiating a conference, **characterized in that**, the method comprises:
obtaining the terminal type of multiple conference attendees according to the received message;
originating a call to the terminal corresponding to the terminal type of the conference attendee according to the protocol type supported by the terminal type of the conference attendee;
switching the call to the network that supports the protocol type, and routing the call to the terminal corresponding to the terminal type of the conference attendee through the network; and switching the information fed back by the terminal and transmitted through the network to a created conference site.

2. The method according to claim 1, wherein the message is a short message.

3. The method according to claim 2, wherein said obtaining the terminal type of multiple conference attendees according to the received message comprises:
resolving the short message sent by the terminal according to the short message template used by the terminal to obtain multiple conference attendee names and/or multiple conference attendee numbers;
searching for the registered account according to the obtained multiple conference attendee names and/or numbers, and obtaining the terminal type of multiple conference attendees according to the terminal type corresponding to the found account.

4. The method according to claim 3, wherein the method further comprises:
resolving the short message sent by the terminal according to the short message template used by the terminal to obtain the conference initiation time; and
said originating a call to the terminal corresponding to the terminal type of the conference attendee according to the protocol type supported by the terminal type of the conference attendee further comprises:
originating the call to the terminal corresponding to the terminal type of the conference attendee at the conference initiation time according to the protocol type supported by the terminal type of conference attendee.

5. The method according to any one of claims 1-4, wherein said originating a call to the terminal corresponding to the terminal type of the conference attendee according to the protocol type supported by the terminal type of the conference attendee comprises:
if the terminal type of the conference attendee is a mobile terminal, originating the call to the mobile terminal through the SS7; or
if the terminal type of the conference attendee is a fixed terminal, originating the call to the fixed terminal through the SS7; or
if the terminal type of the conference attendee is a soft terminal, originating the call to the soft terminal through the SIP.

6. The method according to any one of claims 1-4, wherein said switching the call to the network that supports the protocol type, and routing the call to the terminal corresponding to the terminal type of the conference attendee through the network; and switching the information fed back by the terminal and transmitted through the network to a created conference site comprises:
if the terminal type of the conference attendee is a mobile terminal, soft switching the call based on SS7 to the mobile network, and routing the call to the corresponding mobile terminal through the mobile network; and switching the information fed back by the mobile terminal and transmitted through the mobile network to the created conference site; or
if the terminal type of the conference attendee is a fixed terminal, soft switching the call based on SS7 to the fixed fundamental network, and routing the call to the corresponding fixed terminal through the fixed fundamental network; and switching the information fed back by the fixed terminal and transmitted through the fixed fundamental network to the created conference site; or
if the terminal type of the conference attendee is a soft terminal, soft switching the call based on SIP to the IP network, and routing the call to the corresponding soft terminal through the IP network; and switching the information fed back by the soft terminal and transmitted through the IP network to the created conference site.

7. The method according to claim 3, wherein the short message template used by the received short message is configured according to user demands.

8. A conference system, comprising a protocol stack platform, adapted to forward the message sent by the terminal, **characterized in that**, the system further comprises:
an application service agent, adapted to receive the message forwarded by the protocol stack platform, obtain the terminal type of multiple conference attendees according to the received message, and send a conference initiation request that carries the obtained terminal type of multiple conference attendees;
a conference server, adapted to receive the conference initiation request sent by the application service agent, obtain the terminal type of multiple conference attendees, and originate a call to the terminal corresponding to the terminal type of the conference attendee according to the protocol type supported by the terminal type of the conference attendee; and
a network component, adapted to switch the call to the network that supports the protocol type, and route the call to the terminal corresponding to the terminal type of the conference attendee through the network; and switch the information fed back by the terminal and transmitted through the network to the conference site created by the conference server.

9. The system according to claim 8, wherein the message is a short message, and the application service agent is an SMS application agent.

10. The system according to claim 9, wherein the application service agent is adapted to resolve the short message sent by the terminal according to the short message template used by the terminal to obtain multiple conference attendee names and/or numbers, search for the registered account according to the obtained multiple conference attendee names and/or numbers, and obtain the terminal type of multiple conference attendees according to the terminal type corresponding to the found account.

11. The system according to claim 9, wherein the application service agent is adapted to resolve the short message sent by the terminal according to the short message template used by the terminal to obtain the conference initiation time, and send a conference initiation request that carries the conference initiation time to the conference server;
the conference server is further adapted to originate a call to the terminal corresponding to the terminal type of the conference attendee at the conference initiation time according to the protocol type supported by the terminal type of conference attendee.

12. An application service agent, **characterized in that**, comprising:
an obtaining unit, adapted to obtain the terminal type of multiple conference attendees according to the received message; and
a transmitting unit, adapted to send a conference initiation request that carries the obtained terminal type of multiple conference attendees.

13. The application service agent according to claim 12, wherein the message is a short message, and the application service agent is an SMS application agent; and
the SMS application service agent further comprises:
a short message template providing unit, adapted to provide a short message template for the obtaining unit;
the obtaining unit further comprises:
a resolving subunit, adapted to select a short message template out of the short message templates provided by the short message template providing unit according to the received short message, and use the selected short message template to resolve the received short message to obtain multiple conference attendee names and/or numbers; and
a searching subunit, adapted to search for the registered account according to the obtained multiple conference attendee names and/or numbers to obtain the terminal type of multiple conference attendees according to the terminal type corresponding to the found account.

14. The application service agent according to claim 12, wherein the resolving subunit is further adapted to resolve the received short message according to the short message template used by the received short message to obtain the conference initiation time;
the transmitting unit is further adapted to send a conference initiation request that carries the obtained conference initiation time.

15. A conference server, **characterized in** comprising:
an information obtaining unit, adapted to: receive a conference initiation request, and obtain the terminal type of multiple conference attendees from the received conference initiation request; and
an information processing unit, adapted to: originate a call to the terminal corresponding to the terminal type of the conference attendee according to the protocol type supported by the terminal type of the conference attendee, and notify the switch to switch the call to the network that supports the protocol type and route the call to the corresponding terminal through the network.

16. The server according to claim 15, wherein the information obtaining unit is further adapted to obtain the conference initiation time from the received conference initiation request;
the information processing unit is further adapted to originate a call to the terminal corresponding to the terminal type of the conference attendee at the conference initiation time obtained by the information obtaining unit according to the protocol type supported by the terminal type of the conference attendee; and notify the switch to switch the call to the network that supports the protocol type and route the call to the corresponding terminal through the network.
